# EUROPÄISCHE PATENTSCHRIFT

(11) **EP 0 835 019 B1**
(45) Veröffentlichungstag und Bekanntmachung des Hinweises auf die Patenterteilung: **21.01.2004**
(21) Anmeldenummer: 97402010.9
(22) Anmeldetag: 27.08.1997
(51) Int. Cl.: H04M 15/00, H04Q 3/00

(54) **Verfahren und Vorrichtung zur Festlegung einer Gebühr in einem Telekommunikationsnetz**
Method and apparatus for billing in a telecommunication network
Procédé et dispositif de taxation dans un réseau de télécommunications

(30) Priorität: 28.08.1996 DE 19634664
(43) Veröffentlichungstag der Anmeldung: 08.04.1998
(73) Patentinhaber: ALCATEL, 75008 Paris (FR)
(72) Erfinder: Apel, Ulrich, 71256 Ditzingen (DE)
(74) Vertreter: Knecht, Ulrich Karl, Dipl.-Ing.

(56) Entgegenhaltungen:
- EP-A- 0 526 118
- EP-A- 0 848 560
- WO-A-95/12257
- DE-A- 19 516 364
- US-A- 5 488 655

## Beschreibung

Die vorliegende Erfindung betrifft ein Verfahren zur Festlegung einer Gebühr in einem Telekommunikationsnetz gemäß dem Oberbegriff des Anspruchs 1 und eine Vorrichtung gemäß dem Oberbegriff des Anspruchs 7. Ein solches Verfahren bzw. eine solche Vorrichtung ist bereits aus der Druckschrift EP-A-0 526 118 bekannt.

Es ist bekannt, daß eine Vergebührung für eine Benutzung von Kommunikationsdiensten durch statische Tarife erfolgt. Bei einem statischen Tarif sind die Gebühren für die Benutzung des Kommunikationsdienstes von dem Betreiber des Kommunikationsdienstes im vorhinein festgelegt. Ein Beispiel für einen solchen statischen Tarif ist die allgemein in Telekommunikationsnetzen übliche Vergebührung für den Aufbau einer Verbindung von einem ersten zu einem zweiten Teilnehmer in Abhängigkeit von der Zeit, in der die Verbindung aufgebaut ist, und der Entfernung zwischen den beiden Teilnehmern.

Ein weiteres Beispiel für einen statischen Tarif ist die insbesondere in Telekommunikationsnetzen mit einem asynchronen Übermittlungsverfahren verwendete Vergebührung in Abhängigkeit von der übertragenen Informationsmenge zwischen dem ersten und dem zweiten Teilnehmer.

Es ist die Aufgabe der vorliegenden Erfindung, eine Gebühr für eine Benutzung eines Kommunikationsdienstes in einem Telekommunikationsnetz festzulegen, so daß eine gleichmäßige Auslastung eines Telekommunikationsnetzes ermöglicht wird.

Diese Aufgabe wird durch die technische Lehre des Anspruchs 1 und des Anspruchs 7 gelöst.

Dabei wird einem Benutzer in Abhängigkeit von einer von ihm vorgegebenen Gebührengrenze eine Auswahl von mehreren unterschiedlich konfigurierten Kommunikationsdiensten angeboten.

Weitere vorteilhafte Ausgestaltungen der Erfindung sind den abhängigen Ansprüchen zu entnehmen.

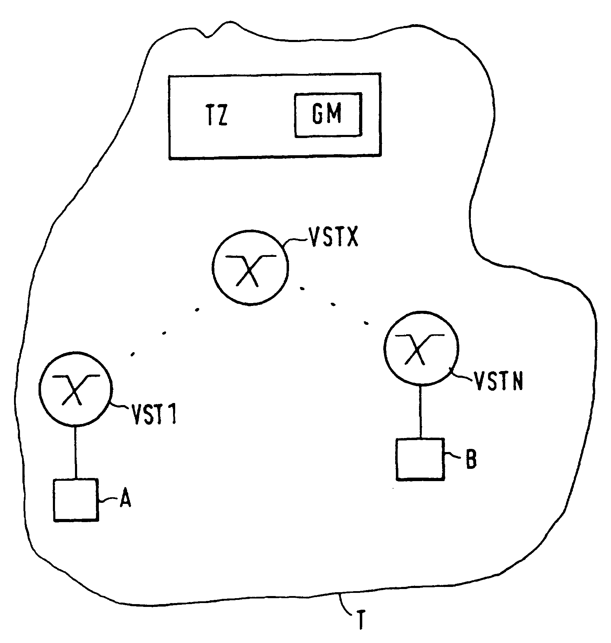

Im folgenden wird die Erfindung und ihre Vorteile anhand eines Ausführungsbeispiels und der Zeichnung verdeutlicht. Es zeigt:
- Die Figur: ein Beispiel eines Telekommunikationsnetzes, in dem das erfindungsgemäße Verfahren ausführbar ist, mit einem Ausführungsbeispiel einer erfindungsgemäßen Vorrichtung.

Die Figur zeigt ein Telekommunikationsnetz T mit einer Vielzahl von Vermittlungsstellen, von denen in der Figur die Vermittlungsstellen VST1, ..., VSTX, ..., VSTN dargestellt sind. Die Vermittlungsstellen sind über nicht dargestellte Übertragungseinrichtungen direkt oder indirekt miteinander verbunden. An die Vermittlungsstellen können Teilnehmer angeschlossen sein. Im vorliegenden Beispiel ist an die Vermittlungsstelle VST1 ein Teilnehmer A und an die Vermittlungsstelle VSTN ein Teilnehmer B angeschlossen. Das Telekommunikationsnetz T weist des weiteren eine zentrale Steuereinrichtung TZ auf. Die Vermittlungsstellen VST1, ..., VSTX, ..., VSTN übermitteln im vorliegenden Beispiel vorgegebene Informationen zur Erfassung und Auswertung, insbesondere für statische Zwecke, zu der zentralen Steuereinrichtung TZ. Solche vorgegebenen Informationen sind insbesondere ebenfalls Informationen über die Belastung des Telekommunikationsnetzes. Belastung bedeutet dabei die Belegung von Ressourcen innerhalb des Telekommunikationsnetzes T.

Die zentrale Steuereinrichtung TZ enthält in dem vorliegenden Beispiel ein Gebührenfestlegemittel GM zur Festlegung der Gebühr für eine Benutzung eines Kommunikationsdienstes nach einem vorgebbaren Kriterium. Ein solches vorgebbares Kriterium kann beispielsweise die Belastung des Telekommunikationsnetzes T oder eine Werbemaßnahme mit reduzierter Gebühr des Betreibers oder irgend einer anderen Organisation sein. Der Kommunikationsdienst kann irgendein innerhalb des Telekommunikationsnetzes T durchführbarer Dienst oder ein Leistungsmerkmal sein, wie z.B. der Aufbau einer Verbindung von einem ersten zu einem zweiten Teilnehmer, einer Rufumleitung von einem ersten zu einem zweiten Teilnehmer oder eine Konferenz zwischen mehreren Teilnehmern sein.

Die zentrale Steuereinrichtung TZ mit dem Gebührenfestlegemittel GM ist für die Durchführung der vorliegenden Erfindung vorteilhaft, allerdings nicht notwendig. Es ist möglich, die Steuerung innerhalb des Telekommunikationsnetzes T und die Festlegung der Gebühr für die Benutzung des Kommunikationsdienstes ausschließlich über eine Signalisierung zwischen den einzelnen Vermittlungsstellen VST1, ..., VSTX, ..., VSTN des Telekommunikationsnetzes T durchzuführen. Dabei kann auf die zentrale Steuereinrichtung TZ verzichtet werden. Die Aufgaben der zentralen Steuereinrichtung TZ können dann dezentral in den jeweiligen Vermittlungsstellen des Telekommunikationsnetzes T ausgeführt werden.

Im vorliegenden Beispiel wird als Kommunikationsdienst eine Verbindung von dem Teilnehmer A zu dem Teilnehmer B aufgebaut. Dazu werden in dem Telekommunikationsnetz T Ressourcen belegt. Dies stellt für das Telekommunikationsnetz T eine weitere Belastung dar. Im vorliegenden Fall ist das vorgegebene Kriterium zur Festlegung der Gebühr für die Benutzung des Kommunikationsdienstes die Belastung des Telekommunikationsnetzes T. Aufgrund der von den Vermittlungsstellen VST1, ..., VSTX, ..., VSTN zu der zentralen Steuereinrichtung TZ übermittelten Informationen über den Belastungszustand des Telekommunikationsnetzes T wird von der zentralen Steuereinrichtung TZ eine erste Information über die Belastung des Telekommunikationsnetzes T bestimmt. Diese Bestimmung der Belastung des Telekommunikationsnetzes T findet vorteilhafterweise nach einem bestimmten Zeittakt statt, so daß die Information über die Belastung des Telekommunikationsnetzes T regelmäßig aktualisiert wird. Für die Verbindung von dem Teilnehmer A zu dem Teilnehmer B wird ein Kanal durch das Telekommunikationsnetz T geschaltet. Die dadurch zu belegenden Ressourcen des Telekommunikationsnetzes T sind der zentralen Steuereinrichtung TZ bekannt. Diese weitere Belastung des Telekommunikationsnetzes T aufgrund der Benutzung des Kommunikationsdienstes durch den Teilnehmer A wird im folgenden als zweite Information bezeichnet. In Abhängigkeit von der ersten und der zweiten Information wird anschließend von dem Gebührenfestlegemittel GM die Gebühr für die Benutzung des Kommunikationsdienstes festgelegt. Diese Gebühr wird dem Teilnehmer A vorteilhafterweise zugänglich gemacht. Dies kann beispielsweise dadurch geschehen, daß diese Gebühr von dem Teilnehmer A online bei der zentralen Steuereinrichtung TZ oder einem anderen, nicht dargestellten Server abgerufen werden kann oder die Gebühr für die Benutzung des Kommunikationsdienstes automatisch zu dem Endgerät des Teilnehmers A übermittelt und von diesem angezeigt wird. Der Betreiber des Kommunikationsdienstes kann für dessen Benutzung eine minimale und/oder maximale Gebühr festlegen.

Auf die oben beschriebene Weise ist es möglich, in die Vergebührung von Kommunikationsdiensten ein dynamisches Prinzip von Angebot und Nachfrage einzuführen. Dynamisch bedeutet dabei, daß die Gebühr für die Benutzung des Kommunikationsdienstes nicht von vornherein festgelegt ist, sondern in Abhängigkeit von einem vorgebbaren Kriterium, wie z.B. der Belastung des Telekommunikationsnetzes T, variabel ist.

Es ist möglich, daß die Gebühr für die Benutzung des Kommunikationsdienstes während der gesamten Benutzung des Kommunikationsdienstes unverändert bleibt. Es ist des weiteren aber ebenso möglich, die Gebühr auch während der Benutzung des Kommunikationsdienstes dynamisch zu ändern.

Es ist vorteilhafterweise ebenfalls möglich, daß der Teilnehmer A für die Benutzung des Kommunikationsdienstes eine maximale Gebührengrenze vorgibt. Der Kommunikationsdienst wird daher nur dann von dem Teilnehmer A benutzt, wenn die augenblickliche Gebühr für die Benutzung des Kommunikationsdienstes diese Gebührengrenze nicht überschreitet. Beispielsweise könnte der Teilnehmer A vorgeben, daß eine Verbindung zu dem Teilnehmer B, der sich in Übersee befindet, nur dann aufgebaut wird, wenn die Gebühr für diese Verbindung einen vorgegebenen Betrag unterschreitet.

Des weiteren kann dem Teilnehmer A, der eine Gebührengrenze für die Benutzung des Kommunikationsdienstes vorgegeben hat, eine Auswahl von unterschiedlich konfigurierten Kommunikationsdiensten angeboten werden. Beispielsweise kann eine Verbindung zu dem Teilnehmer B bei hoher Belastung des Telekommunikationsnetzes T als reine Sprachverbindung und bei niedriger Belastung des Telekommunikationsnetzes T als Sprach- und Bildverbindung angeboten werden. Für den Teilnehmer A ist dabei vorteilhafterweise eine kostengünstige Benutzung von zusätzlichen Kommunikationsdiensten in Zeiten niedriger Belastung des Telekommunikationsnetzes T möglich.

## Patentansprüche

1. Verfahren zur Festlegung einer Gebühr für eine Benutzung eines Kommunikationsdienstes in einem Telekommunikationsnetz (T), bei dem netzseitig die Gebühr für die Benutzung des Kommunikationsdienstes dynamisch nach mindestens einem Kriterium festgelegt wird und bei dem teilnehmerseitig der Kommunikationsdienst in Abhängigkeit von mindestens einer von einem Teilnehmer (A) vorgegebenen Gebührengrenze und der für die Benutzung des Kommunikationsdienstes dynamisch festgelegten Gebühr benutzt wird, **dadurch gekennzeichnet, daß** dem Teilnehmer (A) in Abhängigkeit von der von dem Teilnehmer (A) vorgegebenen Gebührengrenze für die Benutzung des Kommunikationsdienstes mehrere unterschiedlich konfigurierte Kommunikationsdienste zur Auswahl angeboten werden.

2. Verfahren nach Anspruch 1, **dadurch gekennzeichnet, daß** ein vorgebbares Kriterium die Belastung des Telekommunikationsnetzes (T) ist.

3. Verfahren nach Anspruch 2, **dadurch gekennzeichnet, daß** ein Zeittakt festgelegt wird, nach dem die Information über die Belastung des Telekommunikationsnetzes (T) regelmäßig aktualisiert wird, daß eine erste Information über die Belastung des Telekommunikationsnetzes (T) bestimmt wird, daß eine zweite Information über die durch die beabsichtigte Benutzung des Kommunikationsdienstes verursachte weitere Belastung des Telekommunikationsnetzes (T) bestimmt wird und daß in Abhängigkeit von der ersten und der zweiten Information die Gebühr für die Benutzung des Kommunikationsdienstes festgelegt wird.

4. Verfahren nach einem der Ansprüche 1-3, **dadurch gekennzeichnet, daß** eine Information über die Gebühr für die Benutzung des Kommunikationsdienstes einem Teilnehmer (A), der den Kommunikationsdienst nutzen möchte, zugänglich gemacht wird.

5. Verfahren nach einem der Ansprüche 1-4, **dadurch gekennzeichnet, daß** eine minimale und/oder maximale Gebühr für die Benutzung des Kommunikationsdienstes festgelegt wird.

6. Verfahren nach einem der Ansprüche 1-5, **dadurch gekennzeichnet, daß** die Gebühr für die Benutzung des Kommunikationsdienstes geändert wird, auch während der Teilnehmer (A) den Kommunikationsdienst benutzt.

7. System (TZ) zur Festlegung einer Gebühr für eine Benutzung eines Kommunikationsdienstes in einem Telekommunikationsnetz (T), das Mittel (GM) zur netzseitigen, dynamischen Festlegung der Gebühr für die Benutzung des Kommunikationsdienstes nach mindestens einem vorgebbaren Kriterium und Mittel zum Anbieten einer Auswahl unterschiedlich konfigurierter Kommunikationsdienste aufweist, **dadurch gekennzeichnet, daß** die Mittel (GM) so ausgestaltet sind, daß sie die Auswahl unterschiedlich konfigurierter Kommunikationsdienste in Abhängigkeit von einer von einem Teilnehmer (A) festgelegten Gebührengrenze anbieten.

## Claims

1. Method of determining a charge for use of a communications service in a telecommunications network (T) in which the charge for the use of the communications service is determined on the network side dynamically according to at least one criterion and in which the communications service is used on the subscriber side as a function of at least one charge limit specified by a subscriber (A) and of the charge determined dynamically for the use of the communications service, **characterized in that** the subscriber (A) is offered a selection of a plurality of differently configured communications services as a function of the charge limit specified by the subscriber (A) for the use of the communications service.

2. Method according to Claim 1, **characterized in that** a specifiable criterion is the loading of the telecommunications network (T).

3. Method according to Claim 2, **characterized in that** a time cycle is stipulated according to which the information relating to the loading of the communications network (T) is regularly updated, **in that** a first information item relating to the loading of the telecommunications network (T) is determined, **in that** a second information item is determined that relates to the further loading of the telecommunications network (T) due to the intended use of the communications network (T), and **in that** the charge for the use of the communications service is determined as a function of the first and the second information items.

4. Method according to any one of Claims 1-3, **characterized in that** an information item relating to the charge for the use of the communications service is made accessible to a subscriber (A) who would like to use the communications service.

5. Method according to any one of Claims 1-4, **characterized in that** a minimum and/or maximum charge is determined for the use of the communications service.

6. Method according to any one of Claims 1-5, **characterized in that** the charge for the use of the communications service is changed even while the subscriber (A) is using the communications service.

7. System (TZ) for determining a charge for use of a communications service in a telecommunications network (T), which system comprises means (GM) for the network-side, dynamic determining of the charge for the use of the communications service according to at least one specifiable criterion and means for offering a selection of differently configured communications services, **characterized in that** the means (GM) are designed in such a way that they offer the selection of differently configured communications services as a function of a charge limit determined by a subscriber (A).

## Revendications

1. Procédé pour la fixation d'une taxe pour une utilisation d'un réseau de communication dans un réseau de télécommunication (T), avec lequel côté réseau la taxe pour l'utilisation du service de communication est fixée de façon dynamique selon au moins un critère et avec lequel côté abonné le service de communication est utilisé en fonction d'au moins une limite de taxe prédéfinie par un abonné (A) et de la taxe fixée de façon dynamique pour l'utilisation du service dé communication, **caractérisé en ce qu'**on propose à l'abonné (A) le choix entre plusieurs services de communication configurés différemment en fonction de la limite de taxe prédéfinie par l'abonné (A) pour l'utilisation du service de communication.

2. Procédé selon la revendication 1, **caractérisé en ce qu'**un critère prédéfinissable est la charge du réseau de télécommunication (T).

3. Procédé selon la revendication 2, **caractérisé en ce qu'**on fixe un minutage selon lequel l'information sur la charge du réseau de télécommunication (T) est actualisée régulièrement, **en ce qu'**une première information sur la charge du réseau de télécommunication (T) est définie, **en ce qu'**une seconde information sur la nouvelle charge du réseau de télécommunication (T) causée par l'utilisation envisagée du service de communication est définie et **en ce que** la taxe pour l'utilisation du service de communication est fixée en fonction de la première et de la seconde informations.

4. Procédé selon l'une quelconque des revendications 1 à 3, **caractérisé en ce qu'**une information sur la taxe pour l'utilisation du service de communication est rendue accessible à un abonné (A), qui voudrait utiliser le service de communication.

5. Procédé selon l'une quelconque des revendications 1 à 4, **caractérisé en ce qu'**une taxe minimale et/ou maximale pour l'utilisation du service de communication est fixée.

6. Procédé selon l'une quelconque des revendications 1 à 5, **caractérisé en ce que** la taxe pour l'utilisation du service de communication est modifiée, même pendant que l'abonné (A) utilise le service de communication.

7. Système (TZ) pour la fixation d'une taxe pour une utilisation d'un service de communication d'un réseau de télécommunication (T), qui présente des moyens (GM) pour la fixation côté réseau dynamique de la taxe pour l'utilisation du service de communication selon au moins un critère prédéfinissable et des moyens pour proposer un choix de services de communication configurés différemment, **caractérisé en ce que** les moyens (GM) sont conçus de telle sorte qu'ils proposent le choix de services de communication configurés différemment en fonction d'une limite de taxe fixée par un abonné (A).
